# EUROPEAN PATENT SPECIFICATION

(11) **EP 1 749 164 B1**
(45) Date of publication and mention of the grant of the patent: **02.07.2014**
(21) Application number: 04821503.2
(22) Date of filing: 15.11.2004
(51) Int. Cl.: F16K 31/20, B64D 37/00, B64D 37/04, B64D 39/00

(54) **AUXILIARY FUEL TANK SYSTEMS FOR AIRCRAFT**
ZUSATZTREIBSTOFFTANKSYSTEME FÜR FLUGZEUGE
SYSTEMES DE RESERVOIRS DE CARBURANT AUXILIAIRE POUR AERONEFS

(30) Priority: 29.01.2004 US 768242; 29.01.2004 US 768269; 29.01.2004 US 768267
(43) Date of publication of application: 07.02.2007
(60) Divisional application: 12183085.5
(73) Proprietor: The Boeing Company, Chicago, IL 60606-1596 (US)
(72) Inventor: HOWE, Mark, E., Mukilteo, WA 98275 (US)
(74) Representative: Boult Wade Tennant
(86) International application number: PCT/US2004/038149
(87) International publication number: WO 2005/079205

(56) References cited:
- US-A- 2 289 868
- US-A- 2 535 094
- US-A- 2 564 034
- US-A- 2 831 490
- US-A- 2 969 803
- US-A- 3 383 078
- US-A- 3 782 400
- US-A- 4 858 778
- US-B1- 6 491 255

## Description

### TECHNICAL FIELD

The following disclosure relates generally to aircraft fuel tank systems and, more particularly, to auxiliary fuel tank systems that can be installed in aircraft fuselages.

### BACKGROUND

Commercial transport aircraft are typically designed to carry a given load of passengers, cargo, or passengers and cargo over a given range. Occasionally, however, the need arises to increase the range of the aircraft to serve other routes. Increasing the range generally requires increasing the fuel capacity of the aircraft.

Another situation in which it may be necessary to increase the fuel capacity of an aircraft occurs when the role of the aircraft changes. For example, some military aircraft may serve as aerial refueling tankers at one point in time and cargo carriers at another. In the refueling tanker role, auxiliary fuel tanks can be installed in the body (i.e., the fuselage) to increase the amount of fuel that can be off-loaded to other aircraft in flight. In the cargo carrier role, the body tanks can be removed to increase cargo capacity. Whether auxiliary fuel tanks are added to increase range or to increase fuel off-load capacity, they should be relatively easy to install and remove so that the aircraft can be quickly changed into the desired configuration.

One known type of auxiliary fuel tank system includes an auxiliary tank installed in a fuselage of an aircraft. The system uses pneumatic pressure to transfer fuel from the auxiliary tank to a center-wing tank of the aircraft. The source of the pneumatic pressure can be cabin air. Alternatively, a supplemental blower system can be used to deliver pneumatic pressure when the cabin air is not sufficient to transfer the fuel. This particular auxiliary fuel tank includes double-wall construction.

Another known type of auxiliary fuel tank system includes a group of three tanks linked together in a fuselage of an aircraft in a cascading fill/empty arrangement. Like the system described above, this system also uses pneumatic pressure to transfer fuel from the auxiliary tanks to a center-wing tank of the aircraft. In this system, however, the separate tanks are filled in sequence with the first tank overflowing into the next and continuing until all the tanks are full. Fuel is transferred out of the tanks in reverse. That is, the last tank empties first and then the next tank until all of the tanks are empty. The first tank in the group to fill is connected to the main fuel system of the aircraft. The last tank in the group to fill is connected to the aircraft vent system and the pressurization source.

A further known type of auxiliary fuel tank system includes a group of three tanks having individual fuel inlet, fuel outlet, and vent manifolds. Each tank includes individual valves to control the inflow and outflow of fuel from the tank. In addition, a single electric motor-driven fuel pump can be installed in each tank for transferring fuel out of the tank. Alternatively, pneumatic pressure from an aircraft bleed air system can be individually provided to each of the tanks for fuel transfer.

Yet another known type of auxiliary fuel tank system includes two or more auxiliary tanks ganged together with slip-together, low-level interconnects that maintain a uniform fuel level across all the tanks. Fuel is added to the tanks via a main fueling manifold of the aircraft. Pneumatic pressure from an aircraft bleed air system is used to flow fuel from the auxiliary tanks into integral aircraft fuel tanks. Venting of the auxiliary tanks is provided via existing aircraft fuel system vents.

A further known type of auxiliary fuel tank system can be found on KC- 135 series aircraft. This system uses a number of flexible bladders that are permanently laced into a lower section of the fuselage structure. The bladders include low-level interconnects that allow fuel to migrate from one bladder to the next. An aircraft fueling manifold provides fuel to the bladders for filling. Motor-driven pumps are used to move fuel out of the bladders and return it to the aircraft fuel system or to an aerial refueling system. In this system, the auxiliary tank structure (i.e., the bladder) is single-wall construction.

US3383078 A is considered the closest prior art, and discloses an auxiliary fuel system and more particularly systems for increasing the flight range of aircraft.

### SUMMARY

The present invention is directed generally toward a system for providing fuel to at least one of an engine and an aerial refuelling manifold, on an aircraft, as defined in claim 1. A fuel outlet manifold configured in accordance with one aspect of the invention includes a duct and a valve assembly operably coupled to the duct. The duct includes a fuel inlet configured to draw fuel out of a tank. The valve assembly is configured to at least reduce the flow of fuel through the inlet when fuel in the tank drops to or below a selected level. In one embodiment, the valve assembly can include a valve movably positioned in the duct, and a float operably coupled to the valve. Movement of the float can cause the valve to move between a first position in which the duct is at least approximately open and a second position in which the duct is at least approximately closed.

In accordance with the invention, the duct is a first duct having a first fuel inlet and the valve assembly is a first valve assembly operably coupled to the first duct. The fuel outlet manifold further includes a second duct and a second valve assembly operably coupled to the second duct. The second duct has a second fuel inlet configured to draw fuel out of the tank. The second valve assembly is configured to at least reduce the flow of fuel through the second fuel inlet when fuel in the tank drops to or below the selected level.

In accordance with the invention, the duct is a first duct configured to transfer fuel out of a first tank via a first fuel inlet, and the valve assembly is a first valve assembly operably coupled to the first duct. The fuel outlet manifold further comprises a second duct and a second valve assembly operably coupled to the second duct. The second duct includes a second fuel inlet configured to draw fuel out of a second tank body positioned adjacent to the first tank body. The second valve assembly is configured to at least reduce the flow of fuel through the second fuel inlet when fuel in the second tank body drops to or below a selected level.

A method, not claimed, for providing fuel to at least one of an engine and an aerial refueling manifold on an aircraft includes drawing fuel through a duct having a fuel inlet positioned in an auxiliary fuel tank assembly on the aircraft. The method, not claimed, can further include automatically closing a valve in the duct before fuel in the tank assembly drops below the fuel inlet to avoid ingesting air or other gaseous substances into the duct. Automatically closing the valve in the duct can include mechanically closing a valve by movement of a float operably coupled to the valve.

### BRIEF DESCRIPTION OF THE DRAWINGS

Figure 1 is a partially schematic, top isometric view of an aircraft with an auxiliary fuel tank system configured in accordance with an embodiment of the invention.
Figure 2 is an enlarged isometric view of a forward tank group of the auxiliary fuel tank system of Figure 1 configured in accordance with an embodiment of the invention.
Figure 3 is an enlarged isometric view of an aft tank group of the auxiliary fuel tank system of Figure 1 configured in accordance with an embodiment of the invention.
Figure 4 is an enlarged isometric view of a tank body configured in accordance with an embodiment of the invention.
Figure 5 is an enlarged isometric view of a tank body configured in accordance with another embodiment of the invention.
Figure 6 is an enlarged isometric view of a master tank assembly of Figure 3 illustrating features of a fuel outlet manifold configured in accordance with an embodiment of the invention.
Figures 7A-7B are enlarged, partially hidden side elevation views of a shut-off valve assembly of the fuel outlet manifold of Figure 6, configured in accordance with an embodiment of the invention.
Figure 8 is an enlarged isometric view of the master tank assembly of Figure 3 illustrating features of a fuel inlet manifold configured in accordance with an embodiment of the invention.
Figure 9 is an enlarged isometric view of the master tank assembly of Figure 3 illustrating features of a vent manifold configured in accordance with an embodiment of the invention.
Figure 10 is an enlarged isometric view of the master tank assembly of Figure 3 illustrating features of a fuel gauging system configured in accordance with an embodiment of the invention.
Figures 11A-11E are schematic diagrams illustrating modular features of the present invention that enable multiple tank configurations to be assembled from a common set of components in accordance with an embodiment of the invention.

### DETAILED DESCRIPTION

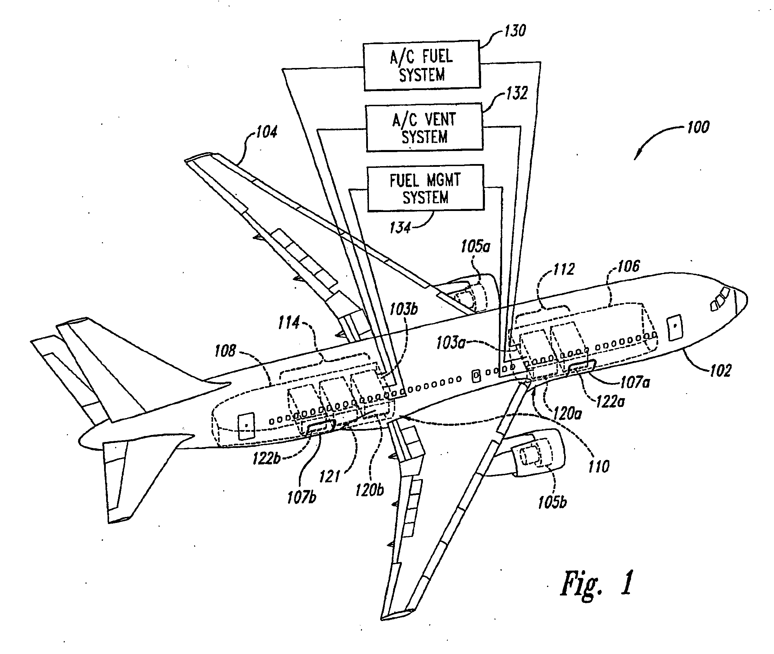

The following disclosure describes auxiliary fuel tank systems for aircraft and methods for their manufacture and use. Certain details are set forth in the following description and in Figures 1-11E to provide a thorough understanding of various embodiments of the invention. Other details describing well-known structures and systems often associated with aircraft and auxiliary fuel tank systems are not set forth in the following disclosure to avoid unnecessarily obscuring the description of the various embodiments of the invention.

Many of the details, dimensions, angles, and other features shown in the Figures are merely illustrative of particular embodiments of the invention. Accordingly, other embodiments can have other details, dimensions, angles, and features without departing from the scope of the present invention. In addition, further embodiments of the invention may be practiced without several of the details described below.

In the Figures, identical reference numbers identify identical or at least generally similar elements. To facilitate the discussion of any particular element, the most significant digit or digits of any reference number refer to the Figure in which that element is first introduced. For example, element 110 is first introduced and discussed with reference to Figure 1.

Figure 1 is a partially schematic, top isometric view of an aircraft 100 having an auxiliary fuel tank system 110 configured in accordance with an embodiment of the invention. The aircraft 100 can include a fuselage 102, a wing 104 extending outwardly from the fuselage 102, and engines 105 (identified individually as a first engine 105a and a second engine 105b) attached to the wing 104 to provide propulsive thrust to the aircraft 100. The fuselage 102 can include a forward cargo compartment 106 having a forward cargo door 107a and an aft cargo compartment 108 having an aft cargo door 107b. In one aspect of this embodiment, the auxiliary fuel tank system 110 includes a forward fuel tank group 112 positioned in the forward cargo compartment 106 and an aft fuel tank group 114 positioned in the aft cargo compartment 108.

As described in greater detail below, both the forward and aft tank groups 112 and 114 can be operably coupled to an aircraft fuel system 130, an aircraft vent system 132, and a fuel management system (FMS) 134 (all shown schematically in Figure 1). The FMS 134 can receive status information from the auxiliary fuel tank system 110 and transmit this information to a flight controller or a display in the cockpit of the aircraft 100. This information can include, for example, the combined total amount of fuel remaining in all of auxiliary tanks and the individual amounts of fuel remaining in each of the tanks. In addition, as further described in greater detail below, the FMS 134 can also control and monitor auxiliary fuel tank inlet and outlet systems (not shown). The aircraft vent system 132 can maintain the pressure in the auxiliary fuel tank system 110 within an acceptable operating range. The aircraft fuel system 130 can distribute fuel to the auxiliary fuel tank system 110 for filling of the forward tank group 112 and the aft tank group 114 during preflight procedures. In flight, the aircraft fuel system 130 can distribute fuel from the forward tank group 112 and the aft tank group 114 to the engines 105. In addition, the aircraft fuel system 130 can also distribute fuel from the forward tank group 112 and the aft tank group 114 to an aerial refueling system (not shown) if the aircraft 100 includes such a refueling system. Alternatively, the aircraft fuel system 130 can distribute fuel from the aerial refueling system to the forward tank group 112 and the aft tank group 114 if desired.

In another aspect of this embodiment, the forward tank group 112 includes a first master tank assembly 120a and a first end tank assembly 122a. The aft tank group 114 can include a second master tank assembly 120b, a mid tank assembly 121, and a second end tank assembly 122b. In the illustrated embodiment, the mid tank assembly 121 and the end tank assemblies 122 are all "slave" tank assemblies. As described in greater detail below, these tanks are slave tanks because they are filled and drained via equipment positioned in the corresponding "master" tanks 120.

In a further aspect of this embodiment, each of the tank assemblies 120, 121, and 122 is shaped and sized to individually fit through the cargo doors 107 without substantial disassembly. For example, referring to the forward tank group 112, the first master tank assembly 120a is configured to pass through the forward cargo door 107a and be removably positioned proximate to an aft bulkhead 103a in the forward cargo compartment 106. Enough space is provided between the first master tank assembly 120a and the bulkhead 103a so that maintenance personnel can access the interfaces between the forward tank group 112 and the aircraft fuel system 130, the aircraft vent system 132, and the FMS 134. The first end tank assembly 122a is also configured to pass through the forward cargo door 107a, and is further configured to be operably coupled to the first master tank assembly 120a. Referring to the aft tank group 114, the second master tank assembly 120b is configured to pass through the aft cargo door 107b and be positioned proximate to a forward bulkhead 103b in the aft cargo compartment 108. Like the first master tank assembly 120a, the second master tank assembly 120b is spaced apart from the forward bulkhead 103b so that maintenance personnel can access the interfaces between the aft tank group 114 and the aircraft fuel system 130, the aircraft vent system 132, and the FMS 134. The mid tank assembly 121 and the second end tank assembly 122b are also configured to pass through the aft cargo door 107b, and they are further configured to be operably coupled to the second master tank assembly 120b in series.

The number and arrangement of auxiliary fuel tanks positioned in either the forward cargo compartment 106 or the aft cargo compartment 108 can be varied to meet particular range and/or fuel off-load requirements. For example, two auxiliary fuel tanks can be positioned in the forward cargo compartment 106 as illustrated in Figure 1 by first moving the first master tank assembly 120a through the first cargo door 107a, and then positioning the first master tank 120a proximate to the aft bulkhead 103a. Next, the first end tank assembly 122a can be moved through the forward cargo door 107a and operably coupled to the first master tank assembly 120a. Alternatively, if three auxiliary fuel tanks are needed in the forward cargo compartment 106, then the first end tank assembly 122a can be moved forward in the forward cargo compartment 106 to clear passage for a mid tank assembly (such as the mid tank assembly 121) entering the forward cargo compartment 106 through the forward cargo door 107a. Once the mid tank assembly is in the forward cargo compartment 106, the three auxiliary fuel tanks in the forward cargo compartment 106 can be arranged in series similar to the aft tank group 114. Similar staging sequences can be used to increase or decrease the number of auxiliary fuel tanks installed in either the forward cargo compartment 106 or the aft cargo compartment 108.

In the illustrated embodiment, both the forward tank group 112 and the aft tank group 114 are positioned outside a five-degree rotor burst cone (not shown) of the engines 105 in compliance with applicable regulatory standards. However, the first master tank assembly 120a can be positioned within a broader 15-degree engine rotor burst cone (also not shown). Accordingly, in one aspect of this embodiment, the forward cargo compartment 106 can include shielding if necessary to adequately protect the first master tank assembly 120a from a rotor burst. In addition or as an alternative, the first master tank assembly 120a can include reinforced tank walls to prevent a rupture in the event of a rotor burst. In another embodiment, the proximity of the second master tank assembly 120b to a landing gear system (not shown) of the aircraft 100 may make it susceptible to damage in the event of a landing gear collapse. In such an embodiment, the second master tank assembly 120b can be made smaller than the corresponding slave tank assemblies 121 and 122 to prevent damage to the second master tank assembly 120b in the event of a landing gear collapse.

The auxiliary fuel tank system 110 illustrated in Figure 1 represents but one possible auxiliary fuel tank arrangement within the scope of the present disclosure. Accordingly, in other embodiments, other numbers of fuel tanks in other arrangements can be used. For example, in one other embodiment, the forward tank group 112 can include only the first master tank assembly 120a and/or the aft tank group 114 can include only the second master tank assembly 120b. In another embodiment, one or more of the master tank assemblies 120 can be the outermost tanks in the respective tank groups, rather than the inner-most as illustrated in Figure 1. In a further embodiment, the forward tank group 112 can be positioned forward in the forward cargo compartment 106 rather than aft, and/or the aft tank group 114 can be positioned aft in the aft cargo compartment 108 rather than forward.

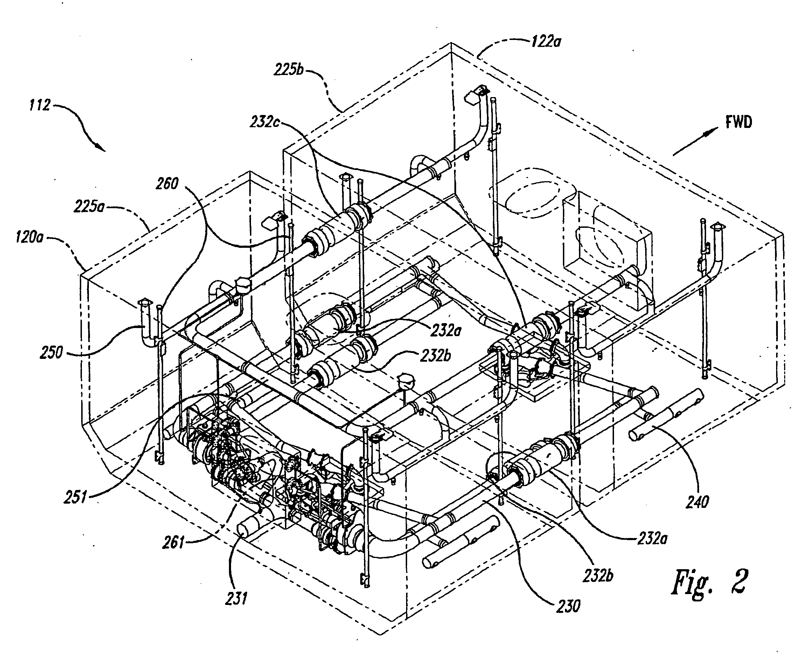

Figure 2 is an enlarged isometric view of the forward tank group 112 configured in accordance with an embodiment of the invention. In one aspect of this embodiment, the first master tank assembly 120a ("the master tank assembly 120a") includes a first tank body 225a, and the first end tank assembly 122a ("the end tank assembly 122a") includes a second tank body 225b. The tank bodies 225 are the fuel-carrying portions of the corresponding tank assemblies 120 and 122, and are shown in phantom line in Figure 2 for purposes of clarity. In one embodiment, the first tank body 225a and the second tank body 225b can be at least approximately identical. That is, they can have the same basic structural configuration. As explained in greater detail below, utilizing common tank structures in this manner can significantly reduce manufacturing and assembly costs associated with auxiliary fuel tank systems.

In a further aspect of this embodiment, the forward tank group 112 includes a fuel system interface 231 configured to be operably coupled to the aircraft fuel system 130 (Figure 1). As described in greater detail below, the fuel system interface 231 serves as a dual purpose fuel inlet/outlet for the forward tank group 112. For example, fuel can flow into the master tank assembly 120a and the end tank assembly 122a from the fuel system interface 231 via a fuel inlet manifold 240. The fuel inlet manifold 240 is configured so that both of the tank assemblies can be filled at approximately the same time, i.e., at least approximately simultaneously. Conversely, fuel can flow out of the master tank assembly 120a and the end tank assembly 122a through the fuel system interface 231 via a fuel outlet manifold 230. The fuel outlet manifold 230 is configured so that both of the tank assemblies can be drained at approximately the same time, i.e., at least approximately simultaneously.

The fuel outlet manifold 230 extends into both the master tank assembly 120a and the end tank assembly 122a, and is coupled together by a first tank interconnect 232a bridging the gap between the two fuel tanks. Similarly, the fuel inlet manifold 240 extends into both the master tank assembly 120a and the end tank assembly 122a, and is coupled together by a second tank interconnect 232b. The tank interconnects 232 can provide sealed interfaces between adjacent fuel tanks and corresponding sections of the fuel outlet manifold 230. In one embodiment, they can have double-wall construction and can include telescoping and gimbaling features that accommodate relative misalignment or motion between the fuel tanks.

In yet another aspect of this embodiment, the forward tank group 112 includes a vent system interface 251 configured to be operably connected to the aircraft vent system 132 (Figure 1). As described in greater detail below, the vent system interface 251 provides venting of the master tank assembly 120a and the end tank assembly 122a via a vent manifold 250. The vent manifold 250 extends into both the master tank assembly 120a and the end tank assembly 122a, and is coupled together by a third tank interconnect 232c.

In a further aspect of this embodiment, the forward tank group 112 includes an FMS interface 261 configured to be operably coupled to the FMS 134 (Figure 1). As described in greater detail below, the FMS interface 261 can transmit various fuel tank status information from the forward tank group 112 to the FMS 134 for use by a pilot or a flight computer. Such information can include, for example, usable fuel remaining in the forward tank group 112 as measured by a fuel gauging system 260.

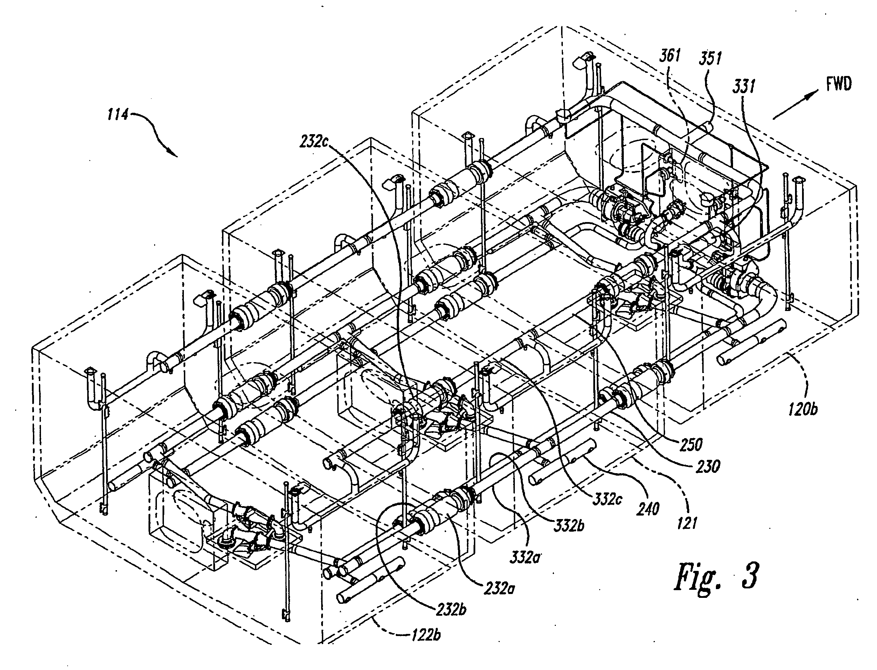

Figure 3 is an enlarged isometric view of the aft tank group 114 configured in accordance with an embodiment of the invention. In one aspect of this embodiment, many portions of the aft tank group 114 are at least generally similar in structure and function to corresponding portions of the forward tank group 112 described above with reference to Figure 2. For example, the second master tank assembly 120b can be at least generally similar in structure and function to the first master tank assembly 120a. Accordingly, the second master tank assembly 120b can include an aircraft fuel system interface 331, an aircraft vent system interface 351, and an FMS interface 361 that are at least generally similar in structure and function to the corresponding portions of the first master tank assembly 120a. Similarly, the second end tank assembly 122b ("the end tank assembly 122b") can be at least generally similar in structure and function to the first end tank assembly 122a. One clear difference between the forward tank group 112 of Figure 2 and the aft tank group 114, however, is the addition of the mid tank assembly 121.

In a further aspect of this embodiment, many portions of the mid tank assembly 121 are at least generally similar in structure and function to corresponding portions of the end tank assembly 122b. One difference between these two tank assemblies, however, is that a number of extensions can be added to the vent and fuel system manifolds in the mid tank assembly 121 to extend the manifolds for coupling to the end tank assembly 122b. For example, outlet manifold extensions 332a can be added to the fuel outlet manifold 230, and inlet manifold extensions 332b can be added to the fuel inlet manifold 240. Similarly, vent manifold extensions 332c can be added to the vent manifold 250. In addition to the manifold extensions 332, additional tank interconnects 232 are also required to operably couple the mid tank assembly 121 to the end tank assembly 122b.

One feature of embodiments described above and illustrated in Figures 1-3 is that both of the tanks in the forward tank group 112 (Figure 1) can be filled and/or drained at least approximately simultaneously, and all three of the tanks in the aft tank group 114 can be filled and/or drained at least approximately simultaneously. One advantage of this feature over other tank systems that fill and drain in a cascading manner is that it can enable the auxiliary fuel tank system 110 (Figure 1) to maintain a more consistent center of gravity location as the fuel tanks are being filled and drained. Another advantage of this feature is that it can enable the forward tank group 112 and the aft tank group 114 to be filled and/or drained at a higher rate than comparably sized tanks that fill and drain in a cascading manner.

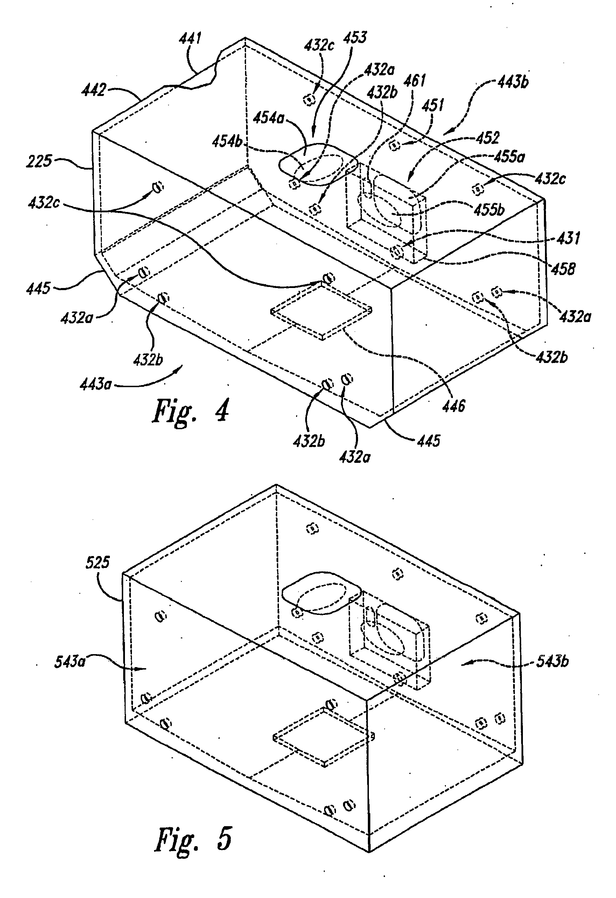

Figure 4 is an enlarged, isometric view of the tank body 225 configured in accordance with an embodiment of the invention. In one aspect of this embodiment, the tank body 225 is of double-wall construction and includes an outer tank skin 442 and an inner tank skin 441. The inner skin 441 can act as a fuel-carrying membrane that can be configured to carry at least about 950 litres (about 250 gallons) of fuel. For example, in one transport aircraft embodiment, the tank body 225 can be configured to carry at least about 2800 litres (about 750 gallons) of fuel. In another such embodiment, the tank body 225 can be configured to carry at least about 3800 litres (about 1000 gallons) of fuel. In other embodiments, the tank body 225 can be configured to carry more or less fuel, depending on the particular needs of the aircraft and on any limiting physical dimensions of the aircraft. Such limiting physical dimensions can include, for example, cargo compartment dimensions and door opening dimensions. The outer skin 442 can provide a redundant fuel barrier to safeguard against leaks and protect the inner skin 441 from external damage.

In another aspect of this embodiment, the tank body 225 includes a top access port 453 and a side access port 452. The top access port 453 can include an outer top door 454a and an inner top door 454b. The outer top door 454a can removably cover a corresponding aperture in the outer tank skin 442. The inner top door 454b can be positioned directly below the outer top door 454a, and can removably cover a corresponding aperture in the inner tank skin 441. Removal of the top doors 454 can provide access to the interior of the tank body 225 for inspection or maintenance of one or more of the systems installed within as described in greater detail below.

The side access port 452 can include an outer side door 455a and an inner side door 455b. The outer side door 455a can removably cover a corresponding aperture in the outer tank skin 442. Removal of the outer side door 455a can provide access to a dry bay 458 extending between the outer tank skin 442 and the inner tank skin 441. As described in greater detail below, a number of fuel tank interface controls can be housed in the dry bay 458 so that they can be easily accessed by maintenance personnel if needed when the tank body 225 is full of fuel. The inner side door 455b can be positioned directly inboard of the outer side door 455a, and can removably cover a corresponding aperture in the inner tank skin 441. Removal of the inner side door 455b can provide additional access to the interior of the tank body 225. In a further aspect of this embodiment, the inner tank skin 441 forms a fuel sump 446 extending downwardly from the bottom of the tank body 225. As further described in detail below, use of the fuel sump 446 helps to reduce the amount of fuel remaining in the tank body 225 after draining.

In yet another aspect of this embodiment, the tank body 225 includes a first end wall 443a and an opposite second end wall 443b. In the illustrated embodiment, the end walls 443 have profiles that maximize the available cross-sectional space in the aircraft cargo compartment. Accordingly, in this embodiment, the end walls 443 include beveled corner portions 445 toward the bottom of the tank body 225 that follow the contour of the cargo compartment. As mentioned above, in other embodiments, the tank body 225 can be made smaller and/or narrower to prevent damage during a landing gear collapse. In such embodiments, the beveled corner portions 445 are not required and the end walls 443 can accordingly be rectangular in shape.

In a further aspect of this embodiment, the first end wall 443a includes two fuel outlet apertures 432a, two fuel inlet apertures 432b, and two vent apertures 432c. These apertures are configured to accommodate passage of the fuel outlet manifold 230, the fuel inlet manifold 240, and the vent manifold 250, respectively, described above with reference to Figures 2 and 3. The second end wall 443b can include the same complement of apertures described above for the first end wall 443a. In addition, however, the second end wall 432b can further include a fuel system aperture 431, a vent system aperture 451, and an FMS aperture 461. As described above with reference to Figure 2, these apertures are configured to accommodate passage of corresponding aircraft interfaces (i.e., the fuel system interface 231, the vent system interface 251, and the FMS interface 261 shown in Figure 2).

One feature of the embodiment described above and illustrated in Figure 4 is that the apertures 432 are common to both the first end wall 443a and the second end wall 443b. As described in greater detail below, one advantage of this feature is that a single tank body configuration (i.e., the tank body 225) can be used to construct the master tank assembly 120, the mid tank assembly 121, or the end tank assembly 122. If some of the end wall apertures are not used for a particular tank configuration, those apertures can be sealed with a suitable cover.

Figure 5 is an enlarged isometric view of a tank body 525 configured in accordance with another embodiment of the invention. Many aspects of the tank body 525 can be at least generally similar in structure and function to the tank body 225 describe above with reference to Figure 4. In one particular aspect of this embodiment, however, the tank body 525 includes a first end wall 543a and an opposite second end wall 543b that are at least generally rectangular in shape and smaller than the corresponding end walls 443 of the tank body 225. As described above, in one embodiment, the smaller tank body 525 can be used for a master or slave tank assembly when the tank assembly is installed in a position that could be susceptible to damage from landing gear collapse.

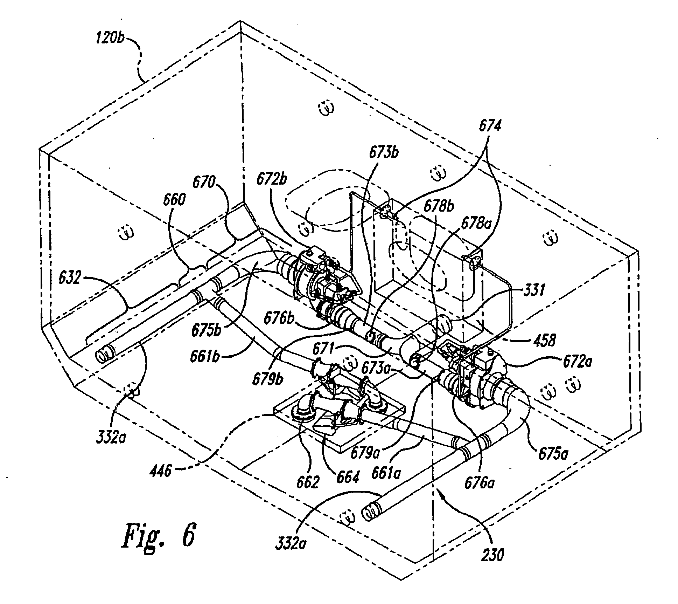

Figure 6 is an enlarged isometric view of the second master tank assembly 120b ("the master tank assembly 120b") of Figure 3 illustrating features of the fuel outlet manifold 230 configured in accordance with an embodiment of the invention. Selected internal components of the master tank assembly 120b, such as the fuel inlet manifold 240, the vent manifold 250, and the fuel gauging system 260, have been omitted from Figure 6 for purposes of clarity. In one aspect of this embodiment, the fuel outlet manifold 230 includes a master tank portion 670 that is unique to the master tank assembly 120b, a basic tank portion 660 that is common to all master and slave tank assemblies, and an extension portion 632 that interconnects the basic tank portion 660 to other basic tank portions 660 positioned in adjacent tank assemblies.

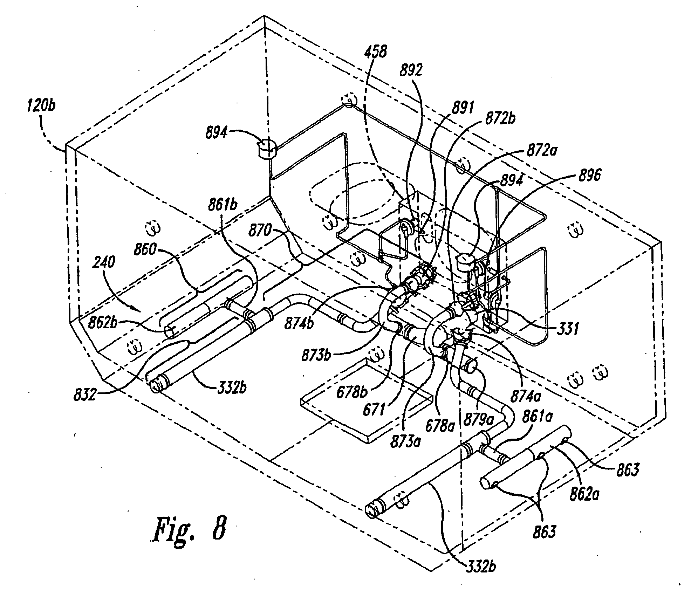

In another aspect of this embodiment, the master tank portion 670 of the fuel outlet manifold 230 is operably coupled to a dual-purpose fuel inlet/outlet manifold 671. The fuel inlet/outlet manifold 671 includes the aircraft fuel system interface 331, and bifurcates into a first branch 673a and a corresponding second branch 673b. Each branch 673 of the fuel inlet/outlet manifold 671 can include an inlet manifold interface 678 (identified individually as a first inlet manifold interface 678a and a second inlet manifold interface 678b). As described below in reference to Figure 8, the inlet manifold interfaces 678 are configured to be operably coupled to corresponding branches of the inlet manifold 240 (not shown).

In a further aspect of this embodiment, each branch 673 of the fuel inlet/outlet manifold 671 also includes an outlet manifold interface 679 (identified individually as a first outlet manifold interface 679a and a second outlet manifold interface 679b). The first outlet manifold interface 679a can be operably coupled to a corresponding first branch 675a of the master tank portion 670. Similarly, the second outlet manifold interface 679b can be operably coupled to a corresponding second branch 675b of the master tank portion 670. Each branch 675 of the master tank portion 670 can include a pump outlet check valve 676 (identified individually as a first pump outlet check valve 676a and a second pump outlet check valve 676b) operably coupled in series to a fuel transfer pump 672 (identified individually as a first fuel transfer pump 672a and a second fuel transfer pump 672b). Because they are positioned within the inner tank volume of the master tank assembly 120b and exposed to fuel, the fuel transfer pumps 672 of the illustrated embodiment can be hydraulically driven. In other embodiments, such as embodiments in which the fuel transfer pumps 672 are positioned within a dry bay 458 of the master tank assembly 120b, the fuel transfer pumps 672 can be electrically driven.

In yet another aspect of this embodiment, a pump pressure switch 674 is operably coupled to each of the fuel transfer pumps 672 and is accessibly mounted in the dry bay 458. The pump pressure switches 674 can be operably connected to the FMS 134 (Figure 1) through a control and monitoring interface (not shown), and can provide a corresponding signal when the fuel transfer pumps 672 are operating. Placing the pump pressure switches 674 in an accessible portion of the dry bay 458 enables them to be inspected or replaced without entering the interior portion of the master tank assembly 120b.

In a further aspect of this embodiment, the basic tank portion 660 of the fuel outlet manifold 230 includes a first fuel inlet duct 661 a operably coupled to the first branch 675a of the master tank portion 670 and a second fuel inlet duct 661 b operably coupled to the second branch 675b of the master tank portion 670. Each of the fuel inlet ducts 661 can include a corresponding fuel inlet 662 positioned at least generally within the fuel sump 446. As described in greater detail below, in a further aspect of this embodiment, each fuel inlet 662 can include a corresponding shutoff valve assembly 664 configured to close the corresponding fuel inlet 662 before the fuel inlet 662 loses prime, that is, before the fuel level in the tank falls below the fuel inlet 662. Closing the fuel inlet 662 while it is still submerged in fuel can prevent the fuel outlet manifold 230 from ingesting air. This can minimize loss of pump prime when any one of two or more tanks in a tank group empties before one or more of the other tanks in the group. Accordingly, when fuel is no longer available in one of the tanks, the corresponding fuel inlets 662 close to isolate the tank from the others in the group.

In a further aspect of this embodiment, the extension portion 632 of the fuel outlet manifold 230 includes two outlet manifold extensions 332a. Each of the outlet manifold extensions 332a can be operably coupled to a corresponding one of the fuel inlet ducts 661. As described above with reference to Figure 3, the outlet manifold extensions 332a can extend the fuel outlet manifold 230 into an adjacent fuel tank assembly, such as the mid tank assembly 121 or an end tank assembly 122 (Figures 2 and 3).

When fuel is being flowed into the master tank assembly 120b through the fuel system interface 331, the pump outlet check valves 676 on the outlet manifold 230 are closed causing the fuel to flow into the inlet manifold 240 (Figures 2 and 3) via the inlet manifold interfaces 678. Conversely, when it is desired to draw fuel from the master tank assembly 120b, the pump outlet check valves 676 are opened and the fuel transfer pumps 672 pump fuel out of the master tank assembly 120b via the fuel inlet ducts 661. Concurrently, the fuel transfer pumps 672 are also pumping fuel out of any adjoining tanks (e.g., the mid tank assembly 121 and the end tank assembly 122 of Figure 3) via the outlet manifold extensions 332a. As fuel is being pumped out of the master tank assembly 120b through the fuel inlet/outlet manifold 671, shutoff valves on the fuel inlet manifold 240 (not shown) are accordingly closed to prevent the fuel from back-flowing into the tanks via the inlet manifold 240.

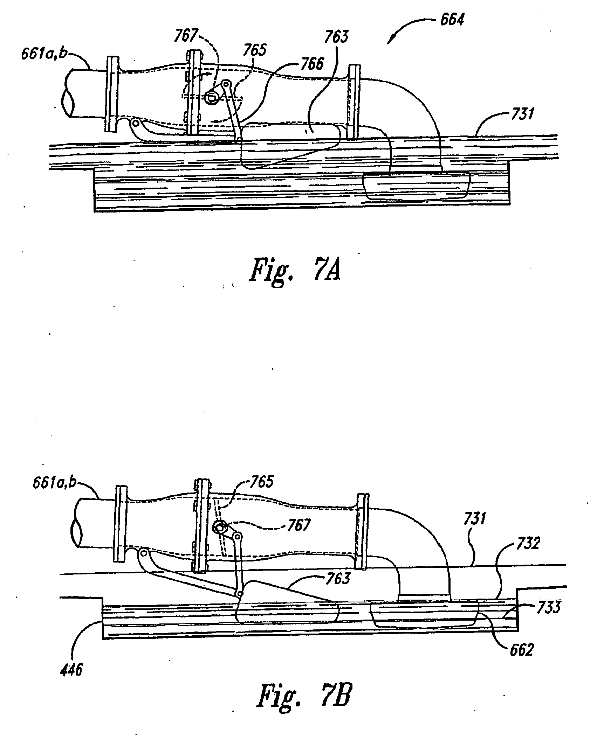

Figures 7A-7B are enlarged, partially hidden side elevation views of the shutoff valve assembly 664 of Figure 6 configured in accordance with an embodiment of the invention. Referring first to Figure 7A, in one aspect of this embodiment, the shutoff valve assembly 664 includes a float 763 operably coupled to a valve 765 via a linkage 766. The valve 765 can be positioned inside the fuel inlet duct 661, and can be a butterfly type configured to rotate about a shaft 767 as the position of the float 763 changes. When fuel in the tank is at or above a first fuel level 731, the float 763 maintains the valve 765 in a fully open position as shown in Figure 7A.

Referring next to Figure 7B, as the fuel level drops from the first fuel level 731 toward a second fuel level 732, the float 763 moves downwardly causing the valve 765 to begin rotating about the shaft 767 toward a closed position. When the fuel level reaches the second fuel level 732, the valve 765 is at least approximately fully closed as shown in Figure 7B. At this point, the fuel inlet 662 is still submerged, thereby preventing the fuel inlet duct 661 from ingesting air or other gaseous substances occupying the space in the fuel tank above the fuel. Even if the fuel level drops to a third fuel level 733, the fuel inlet 662 will still be submerged. Accordingly, the distance between the second fuel level 732 and the third fuel level 733 corresponds to a buffer between a closed valve position and an uncovered inlet position. In a further aspect of this embodiment, by positioning the fuel inlet 662 and the corresponding shutoff valve assembly 664 in the fuel sump 446, the amount of fuel remaining in the tank after draining is minimized.

The shutoff valve assembly 664 is but one type of mechanical shutoff valve that can be used with the fuel outlet manifold 230 to avoid losing prime on one or more of the fuel transfer pumps 672. In other embodiments, other types of shutoff valves can be used. For example, in one other embodiment, an electrically actuated valve can be used. In a further embodiment, a hydraulically actuated valve can be used. In still further embodiments, the shutoff valve assembly 664 can be omitted and, instead, a fuel level sensor can be used to command a valve, such as an electrically actuated valve, to close the corresponding fuel inlet before the fuel level drops below the inlet.

Figure 8 is an enlarged isometric view of the master tank assembly 120b of Figure 3 illustrating features of the fuel inlet manifold 240 configured in accordance with an embodiment of the invention. Selected Internal components of the master tank assembly 120b, such as the vent manifold 250 and the fuel gauging system 260, have been omitted from Figure 8 for purposes of clarity. In addition, the fuel outlet manifold 230 of Figure 6 (which is normally coupled to the fuel inlet/outlet manifold 671 at the outlet manifold interfaces 679) is also not shown in Figure 8 for purposes of clarity. In one aspect of this embodiment, the fuel inlet manifold 240 includes a master tank portion 870 that is unique to the master tank assembly 120b, a basic tank portion 860 that is common to all master and slave tank assemblies, and an extension portion 832 that interconnects the basic tank portion 860 to other basic tank portions 860 positioned in adjoining tank assemblies.

In another aspect of this embodiment, the master tank portion 870 of the fuel inlet manifold 240 includes a first branch 873a operably coupled to the fuel inlet/outlet manifold 671 at the first inlet manifold interface 678a and a second branch 873b operably coupled to the fuel inlet/outlet manifold 671 at the second inlet manifold interface 678b. Each branch 873 of the master tank portion 870 can include a primary fueling valve 872 (identified individually as a first primary fueling valve 872a and a second primary fueling valve 872b) operably coupled in series to a secondary fueling valve 874 (identified individually as a first secondary fueling valve 874a and a second secondary fueling valve 874b). In addition, each branch 873 of the fuel inlet manifold 240 can also include a refuel shutoff pressure switch 891 and a ground fueling solenoid valve 892 positioned in the dry bay 458. The refuel shutoff pressure switch 891 and the ground fueling solenoid valve 892 can be operably coupled between the secondary fueling valve 874 and a corresponding pilot float valve 894. The pilot float valve 894 is configured to command the secondary fueling valve 874 closed when the fuel in the tank rises above the pilot float valve 894, thereby stopping the flow of fuel into the master tank assembly 120b. If desired, the ground fueling solenoid valve 892 can be used to override the pilot float valve 894 and increase the fuel level in the master tank assembly 120b above that normally allowed by the pilot fuel valve 894. The refuel shutoff pressure switch 891 can be configured to send a signal to the FMS 134 (Figure 1) corresponding to the position of the secondary fueling valve 874, that is, corresponding to whether the secondary fueling valve 874 is open or closed.

In a further aspect of this embodiment, the master tank portion 870 of the fuel inlet manifold 240 can also include a solenoid pre-check valve 896 positioned within the dry bay 458. The solenoid pre-check valve 896 can be operably coupled to both of the pilot float valves 894. The solenoid pre-check valve 896 can provide a means for verifying that the pilot float valves 894 are functioning properly. For example, in one embodiment, the solenoid pre-check valves 896 can be commanded through the FMS 134 (Figure 1) to rapidly fill the pilot float valves 894 with fuel to verify that they cause the secondary fueling valves 874 to close properly. The FMS 134 can control the primary fueling valves 872, the solenoid pre-check valves 896, the ground fueling solenoid valves 892, and the shutoff pressure switch 891 through the FMS interface 261 described above with reference to Figure 2.

In yet another aspect of this embodiment, the basic tank portion 860 of the fuel inlet manifold 240 includes a first fuel outlet duct 861a operably coupled to the first branch 873a of the master tank portion 870 and a second fuel outlet duct 861 b operably coupled to the second branch 873b of the master tank portion 870. In the illustrated embodiment, each of the fuel outlet ducts 861 includes a piccolo tube 862 (identified individually as a first piccolo tube 862a and a second piccolo tube 862b) having a plurality of fuel outlets 863. The fuel outlets 863 distribute incoming fuel into the interior of the master tank assembly 120b.

In a further aspect of this embodiment, the extension portion 832 of the fuel inlet manifold 240 includes two inlet manifold extensions 332b. Each of the inlet manifold extensions 332b can be operably coupled to a corresponding one of the fuel outlet ducts 861. As described above with reference to Figure 3, the inlet manifold extensions 332b can extend the fuel inlet manifold 240 into an adjoining fuel tank assembly, such as the mid tank assembly 121 or an end tank assembly 122 (Figures 2 and 3).

To fill the master tank 120b and any corresponding slave tanks (not shown) with fuel, the primary and secondary fueling valves 872 and 874 are opened and fuel is introduced into the fuel inlet/outlet manifold 671 via the fuel system interface 331. From the inlet/outlet manifold 671, the fuel flows past the opened primary fueling valves 872 and the opened secondary fueling valves 874 to the fuel outlet ducts 861. From there, the fuel flows into the master tank assembly 120b from the corresponding piccolo tubes 862. Concurrently, the fuel also flows to any adjoining tanks (e.g., the mid tank assembly 121 and the end tank assembly 122 of Figure 3) via the inlet manifold extensions 332b. As fuel is being flowed into the master tank assembly 120b through the fuel inlet/outlet manifold 671, the pump outlet check valves 676 (Figure 6) on the fuel outlet manifold 230 are accordingly closed to prevent the fuel from back-flowing into the fuel transfer pumps 672 (also Figure 6).

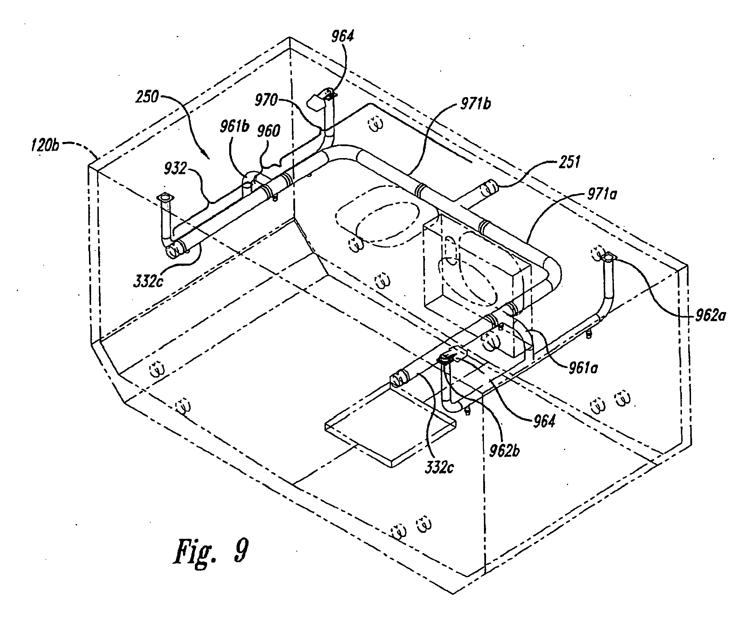

Figure 9 is an enlarged isometric view of the master tank assembly 120b of Figure 3 illustrating features of the vent manifold 250 configured in accordance with an embodiment of the invention. Selected internal components of the master tank assembly 120b, such as the fuel inlet manifold 240, the fuel outlet manifold 230, and the fuel gauging system 260 have been omitted from Figure 9 for purposes of clarity. In one aspect of this embodiment, the vent manifold 250 includes a master tank portion 970 that is unique to the master tank assembly 120b, a basic tank portion 960 that is common to all master and slave tank assemblies, and an extension portion 932 that interconnects the basic tank portion 960 to other basic tank portions 960 positioned in adjoining tank assemblies.

In another aspect of this embodiment, the master tank portion 970 of the vent manifold 250 includes a first branch 971 a and a second branch 971 b extending outwardly from the vent system interface 251. The basic tank portion 960 of the vent manifold 250 can include a first vent duct 961a operably coupled to the first branch 971 a and a second vent duct 961 b operably coupled to the second branch 971 b. The extension portion 932 of the vent manifold 250 can include two vent manifold extensions 332c. Each of the vent manifold extensions 332c can be operably coupled to a corresponding one of the vent ducts 961. As described above with reference to Figure 3, the vent manifold extensions 332c can extend the vent manifold 250 into an adjoining fuel tank assembly, such as the mid tank assembly 121 or an end tank assembly 122 (Figures 2 and 3).

In a further aspect of this embodiment, each of the vent ducts 961 includes a first vent port 962a and a second vent port 962b. In the illustrated embodiment, the first vent port 962a remains open at all times, but the second vent port 962b includes a vent float valve 964 configured to close the second vent port 962b if the fuel level rises above the second vent port 962b. The arrangement of the vent float valves 964 can minimize the amount of fuel flowing into the vent manifold 250 as the fuel sloshes around in the master tank assembly 120b.

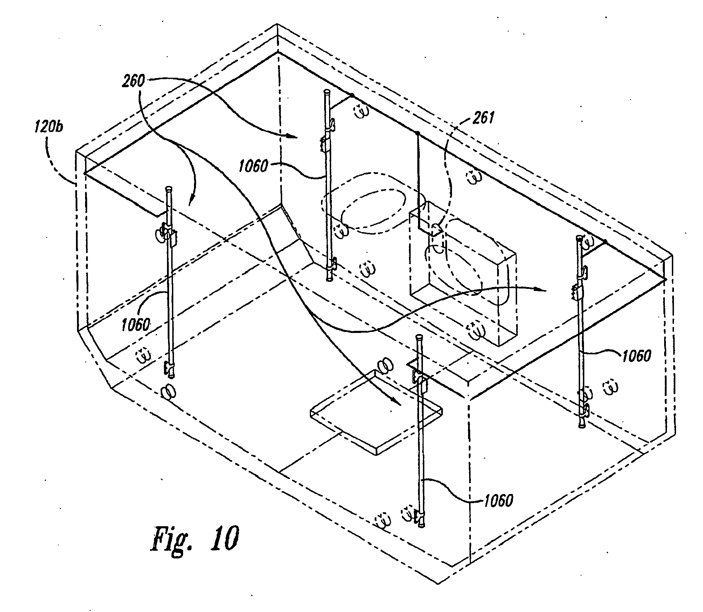

Figure 10 is an enlarged isometric view of the master tank assembly 120b of Figure 3 illustrating features of the fuel gauging system 260 configured in accordance with an embodiment of the invention. Selected internal components of the master tank assembly 120b, such as the fuel inlet manifold 240, the fuel outlet manifold 230, and the vent manifold 250 have been omitted from Figure 10 for purposes of clarity. In one aspect of this embodiment, the fuel gauging system 260 includes four fuel probes or fuel gauges 1060 mounted toward respective corners of the master tank assembly 120b. The plurality of fuel gauges 1060 can be operably connected to the FMS interface 261 to provide fuel volume information to the aircraft FMS 134 (Figure 1).

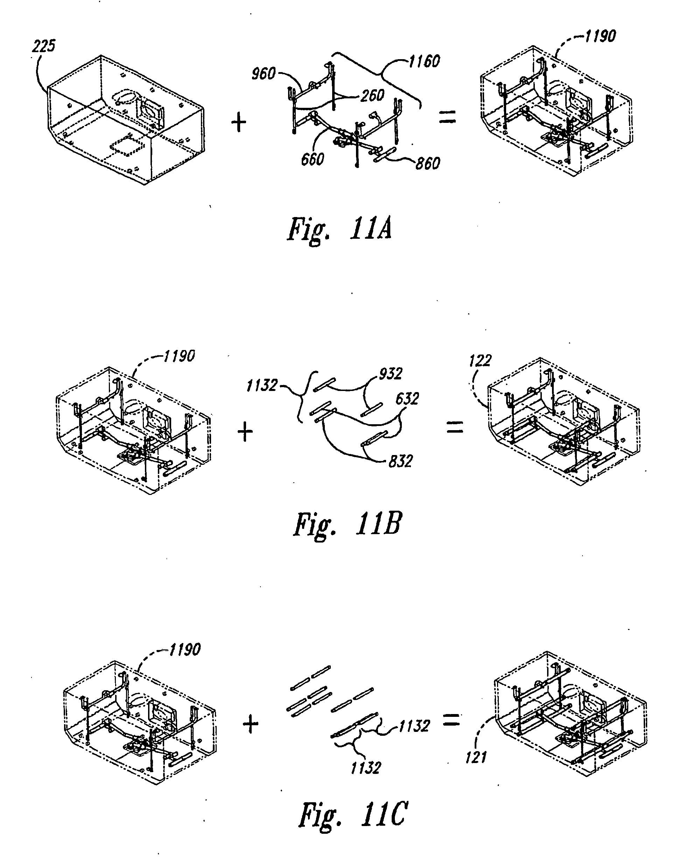

Figures 11A-11E are schematic diagrams illustrating modular features of the present invention that enable at least three different tank configurations to be assembled from the same basic set of components. Referring first to Figure 11A, a tank assembly sequence in accordance with one embodiment of the invention can begin with the basic tank body 225 described above with reference to Figure 4. Basic tank systems 1160 can be added to the tank body 225 to produce a basic tank assembly 1190. The basic tank systems 1160 can include the basic tank portion 660 of the fuel outlet manifold 230 (Figure 6), the basic tank portion 860 of the fuel inlet manifold 240 (Figure 8), the basic tank portion 960 of the vent manifold 250 (Figure 9), and the fuel gauging system 260 (Figure 10).

The basic tank assembly 1190 of Figure 11A can form the basis of a number of different tank configurations. For example, referring to Figure 11B, in one embodiment, manifold extension systems 1132 can be added to the basic tank assembly 1190 to produce the end tank assembly 122 described above with reference to Figures 1-3. The manifold extension systems 1132 can include the extension portion 632 of the fuel outlet manifold 230 (Figure 6), the extension portion 832 of the fuel inlet manifold 240 (Figure 8), and the extension portion 932 of the vent manifold 250 (Figure 9). Referring next to Figure 11C, in another embodiment, two sets of the manifold extension systems 1132 can be added to the basic tank assembly 1190 to produce the mid tank assembly 121 described above with reference to Figures 1 and 3.

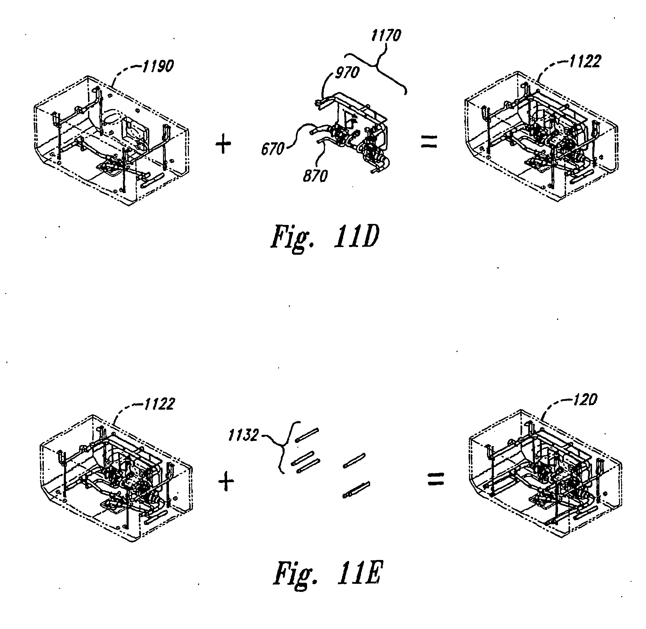

Referring next to Figure 11D, in a further embodiment, master tank systems 1170 can be added to the basic tank assembly 1190 to produce a single master tank assembly 1122. The master tank systems 1170 can include the master tank portion 670 of the fuel outlet manifold 230 (Figure 6), the master tank portion 870 of the fuel inlet manifold 240 (Figure 8), and the master tank portion 970 of the vent manifold 250 (Figure 9). In one embodiment, the single master tank assembly 1122 can be a master tank assembly that is configured for individual use without any corresponding slave tank assemblies. Alternatively, referring to Figure 11E, in yet another embodiment, the manifold extension systems 1132 can be added to the single master tank assembly 1122 to create the master tank assembly 120 described above with reference to Figures 2-10.

From the foregoing, it will be appreciated that specific embodiments of the invention have been described herein for purposes of illustration, but that various modifications may be made without deviating from the scope of the invention. Accordingly, the invention is not limited except as by the appended claims.

## Claims

1. A system for providing fuel to at least one of an engine and an aerial refuelling manifold on an aircraft (100), the system comprising an auxiliary fuel tank system, the auxiliary fuel tank system comprising:
a tank (120, 121, 122), comprising a fuel-carrying portion (225) and a sump region (446) extending downwardly from the bottom of the fuel-carrying portion;
an aircraft fuel outlet manifold (230) comprising:
a first duct (661a) having a first fuel inlet (662) positioned to draw fuel out of the sump region (446) of the tank, the first duct further having a first fuel outlet that transfers fuel through a first outlet aperture (432a) in an end wall (443a) of the tank, the first duct being arranged to transfer fuel from the fuel tank to at least one of the engine and the aerial refuelling manifold;
a first valve assembly (664) operably coupled to the first duct and positioned proximate to the sump region of the tank, wherein the first valve assembly is configured to at least reduce the flow of fuel through the first fuel inlet when fuel in the tank drops to or below a selected level (731);
a second valve assembly (664) operably coupled to a second duct, the second duct (661b) having a second fuel inlet (662) positioned to draw fuel out of the sump region of the tank, the second duct further having a second fuel outlet that transfers fuel through a second outlet aperture (432a) in the end wall of the tank, wherein the second valve assembly is positioned proximate to the sump region of the tank, and wherein the second valve assembly is configured to at least reduce the flow of fuel through the second fuel inlet when fuel in the tank drops to or below the selected level, **characterized in that** the second duct is arranged to transfer fuel from the fuel tank to at least one of the engine and aerial refuelling manifold.

2. The system of claim 1 wherein the first valve assembly is configured to be positioned in the tank at least proximate to the first fuel inlet.

3. The system of claim 1 wherein the valve assembly includes:
a first valve (765) movably positioned in the first duct; and
a fuel level sensor operably coupled to the first valve, wherein the fuel level sensor is configured to close the first valve and at least reduce the flow of fuel through the first inlet when fuel in the tank drops to or below the selected level.

4. The system of claim 1 wherein the first valve assembly includes:
a first valve movably positioned in the first duct; and
a float (763) operably coupled to the first valve, wherein movement of the float causes the first valve to move between a first position in which the first duct is at least approximately open and a second position in which the first duct is at least approximately closed.

5. The system of claim 4 wherein the float is mechanically coupled to the valve.

6. The system of claim 4 wherein the float is electronically coupled to the valve.

7. The system of claim 1 wherein the first valve assembly includes:
a valve rotatably mounted in the first duct; and
a float operably coupled to the valve, wherein movement of the float causes the valve to rotate between a first position in which the first duct is at least approximately open and a second position in which the first duct is at least approximately closed.

8. The system of claim 1 wherein the valve assembly includes:
a valve rotatably mounted in the first duct;
a float operably coupled to the valve, wherein the float is configured to move toward an upper position causing the valve to rotate in a first direction to at least approximately open the first duct when fuel in the tank is at or above a first level, and wherein the float is further configured to move from the upper position toward a lower position causing the valve to rotate in a second direction to at least approximately close the first duct when fuel in the tank drops from the first level toward a second level (732).

9. The system of claim 1 wherein the tank is a first tank, and wherein the fuel outlet manifold further comprises:
a third duct having a third fuel inlet configured to draw fuel out of a second tank positioned adjacent to the first tank; and
a third valve assembly operably coupled to the third duct, wherein the third valve assembly is configured to at least reduce the flow of fuel through the third fuel inlet when fuel in the second tank drops to or below a selected level.

10. An aircraft system comprising the system of claim 9, wherein:
the first tank is configured to hold fuel in a fuselage (102);
the second tank has a second end wall (443b) facing the first end wall;
the fuel outlet manifold extends through the first end wall of the first tank and the second end wall of the second tank.

11. The aircraft system of claim 10 wherein the first tank body includes beveled corner portions (445) configured to at least approximately follow the contour of a cargo compartment of the fuselage.

12. The aircraft system of claim 10 wherein the sump portion defines a lowermost fuel-carrying portion of the tank body.

13. The aircraft system of claim 10, further comprising the fuselage.

14. The system of any of claims 1 - 9, the system further comprising:
a first pump (672a) positioned in the fuel tank and operably coupled to the first duct for moving fuel through the first fuel inlet; the first valve assembly further configured to automatically close the first duct before fuel in the fuel tank drops below the first fuel inlet to avoid ingesting a gaseous substance into the duct means;
a second pump (672b) positioned in the fuel tank and operably coupled to the second duct for moving fuel through the second fuel inlet; the second valve assembly further configured to automatically close the second duct means before fuel in the fuel tank drops below the second fuel inlet to avoid ingesting a gaseous substance into the second duct means.

15. The system of claim 14 wherein the fuel tank is a first fuel tank, and wherein the system further comprises:
a second fuel tank means for carrying fuel in the aircraft;
a third duct for transferring fuel from the second fuel tank to at least one of the engine and the aerial refueling manifold via a third fuel inlet positioned in the second fuel tank; and
a third valve assembly for automatically closing the third duct before fuel in the second fuel tank means drops below the third fuel inlet to avoid ingesting a gaseous substance into the third duct.

16. The system of claim 15, wherein the first fuel tank is removably positioned in a fuselage of the aircraft and the second fuel tank is removably positioned in the fuselage at least proximate to the first fuel tank.

17. The system of claim 15, wherein the first, second and third ducts are operably coupled to a common manifold means.

## Patentansprüche

1. System zum Versorgen eines Triebwerks und/oder eines Luftbetankungsanschlusses an einem Luftfahrzeug (100) mit Treibstoff, wobei das System ein Zusatztreibstofftanksystem umfasst und wobei das Zusatztreibstofftanksystem aufweist: einen Tank (120, 121, 122), der einen Treibstoff aufnehmenden Bereich (225) und einen Sammelbereich (446) aufweist, der sich vom Boden des den Treibstoff aufnehmenden Bereichs nach unten erstreckt;
ein Luftfahrzeugtreibstoffauslassanschluss (230), der aufweist:
eine erste Leitung (661a), die einen ersten Treibstoffeinlass (662) aufweist, der zum Ansaugen von Treibstoff aus dem Sammelbereich (446) des Tanks angeordnet ist, wobei die erste Leitung ferner einen ersten Treibstoffauslass aufweist, der Treibstoff durch eine erste Auslassöffnung (432a) in einer Stirnwand (443a) des Tanks leitet, wobei die erste Leitung dazu ausgebildet ist, Treibstoff von dem Treibstofftank zu dem Triebwerk und/oder dem Luftbetankungsanschluss zu leiten;
eine erste Ventilanordnung (664), die mit der ersten Leitung funktionell verbunden und in der Nähe des Sammelbereichs des Tanks angeordnet ist, wobei die erste Ventilanordnung dazu ausgebildet ist, wenigstens den Treibstofffluss durch den ersten Treibstoffeinlass zu verringern, wenn der Treibstoff in dem Tank auf oder unter ein gewähltes Niveau (731) absinkt;
eine zweite Ventilanordnung (664), die mit einer zweiten Leitung funktionell verbunden ist, wobei die zweite Leitung (661b) einen zweiten Treibstoffeinlass (662) aufweist, der zum Ansaugen von Treibstoff aus dem Sammelbereich des Tanks angeordnet ist, wobei die zweite Leitung ferner einen zweiten Treibstoffauslass aufweist, der Treibstoff durch eine zweite Auslassöffnung (432a) in der Stirnwand des Tanks leitet, wobei die zweite Ventilanordnung in der Nähe des Sammelbereichs des Tanks angeordnet ist und wobei die zweite Ventilanordnung dazu ausgebildet ist, wenigstens den Treibstofffluss durch den zweiten Treibstoffeinlass zu verringern, wenn der Treibstoff in dem Tank auf oder unter ein gewähltes Niveau absinkt, **dadurch gekennzeichnet, dass** die zweite Leitung dazu ausgebildet ist, Treibstoff von dem Treibstofftank zum Triebwerk und/oder zum Luftbetankungsanschluss zu leiten.

2. System nach Anspruch 1, wobei die erste Ventilanordnung dazu ausgebildet ist, in dem Tank zumindest in der Nähe des ersten Treibstoffeinlasses angeordnet zu werden.

3. System nach Anspruch 1, wobei die Ventilanordnung aufweist:
ein erstes Ventil (765), das in der ersten Leitung bewegbar angeordnet ist; und
einen Treibstoffniveausensor, der mit dem ersten Ventil funktionell verbunden ist, wobei der Treibstoffniveausensor dazu ausgebildet ist, das erste Ventil zu schließen und wenigstens den Treibstofffluss durch den ersten Einlass zu verringern, wenn der Treibstoff in dem Tank auf oder unter das gewählte Niveau absinkt.

4. System nach Anspruch 1, wobei die erste Ventilanordnung aufweist:
ein erstes Ventil, das in der ersten Leitung bewegbar angeordnet ist; und
einen Schwimmkörper (763), der mit dem ersten Ventil funktionell verbunden ist, wobei eine Bewegung des Schwimmkörpers bewirkt, dass sich das erste Ventil zwischen einer ersten Stellung, in der die erste Leitung zumindest in etwa offen ist, und einer zweiten Stellung, in der die erste Leitung in etwa geschlossen ist, bewegt.

5. System nach Anspruch 4, wobei der Schwimmkörper mechanisch mit dem Ventil verbunden ist.

6. System nach Anspruch 4, wobei der Schwimmkörper elektronisch mit dem Ventil gekoppelt ist.

7. System nach Anspruch 1, wobei die erste Ventilanordnung aufweist:
ein Ventil, das in der ersten Leitung drehbar angeordnet ist; und
einen Schwimmkörper, der mit dem Ventil funktionell verbunden ist, wobei eine Bewegung des Schwimmkörpers bewirkt, dass sich das Ventil zwischen einer ersten Stellung, in der die erste Leitung zumindest in etwa offen ist, und einer zweiten Stellung, in der die erste Leitung in etwa geschlossen ist, dreht.

8. System nach Anspruch 1, wobei die Ventilanordnung aufweist:
ein Ventil, das in der ersten Leitung drehbar angeordnet ist; und
einen Schwimmkörper, der mit dem Ventil funktionell verbunden ist, wobei der Schwimmkörper dazu ausgebildet ist, sich in Richtung einer oberen Position zu bewegen, wodurch bewirkt wird, dass sich das Ventil in einer ersten Richtung dreht, um die erste Leitung zumindest in etwa zu öffnen, wenn sich der Treibstoff in dem Tank auf einem oder über einem ersten Niveau befindet, und wobei der Schwimmkörper ferner dazu ausgebildet ist, sich von der oberen Position in Richtung einer unteren Position zu bewegen, wodurch bewirkt wird, dass sich das Ventil in einer zweiten Richtung dreht, um die erste Leitung zumindest in etwa zu schließen, wenn der Treibstoff in dem Tank von dem ersten Niveau in Richtung eines zweiten Niveaus (732) absinkt.

9. System nach Anspruch 1, wobei es sich bei dem Tank um einen ersten Tank handelt und wobei der Treibstoffauslassanschluss ferner aufweist:
eine dritte Leitung, die einen dritten Treibstoffeinlass aufweist,
der ausgebildet ist, Treibstoff aus einem zweiten Tank anzusaugen, der benachbart zu dem ersten Tank angeordnet ist;
und
eine dritte Ventilanordnung, die funktionell mit der dritten Leitung verbunden ist, wobei die dritte Ventilanordnung dazu ausgebildet ist, wenigstens den Treibstofffluss durch den dritten Treibstoffeinlass zu verringern, wenn der Treibstoff in dem zweiten Tank auf oder unter ein gewähltes Niveau absinkt.

10. Luftfahrzeugsystem, das das System nach Anspruch 9 umfasst, wobei:
der erste Tank zur Aufnahme von Treibstoff in einem Rumpf (102) ausgebildet ist;
der zweite Tank eine zur ersten Stirnwand weisende zweite Stirnwand (443b) aufweist;
sich der Treibstoffauslassanschluss durch die erste Stirnwand des ersten Tanks und durch die zweite Stirnwand des zweiten Tanks erstreckt.

11. Luftfahrzeugsystem nach Anspruch 10, wobei das erste Tankgehäuse abgeschrägte Eckbereiche (445) aufweist, die ausgebildet sind, der Kontur eines Laderaums des Rumpfes zumindest in etwa zu folgen.

12. Luftfahrzeugsystem nach Anspruch 10, wobei der Sammelbereich einen untersten Treibstoff aufnehmenden Bereich des Tankgehäuses festlegt.

13. Luftfahrzeugsystem nach Anspruch 10, das ferner den Rumpf umfasst.

14. System nach einem der Ansprüche 1 bis 9, wobei das System ferner aufweist:
eine erste Pumpe (672a), die in dem Treibstofftank angeordnet und mit der ersten Leitung funktionell verbunden ist, um Treibstoff durch den ersten Treibstoffeinlass zu fördern, wobei die erste Ventilanordnung ferner dazu ausgebildet ist, die erste Leitung automatisch zu schließen, bevor der Treibstoff in dem Treibstofftank unter den ersten Treibstoffeinlass absinkt, um ein Eindringen einer gasförmigen Substanz in das Leitungssystem zu vermeiden;
eine zweite Pumpe (672b), die in dem Treibstofftank angeordnet und mit der zweiten Leitung funktionell verbunden ist, um Treibstoff durch den zweiten Treibstoffeinlass zu fördern, wobei die zweite Ventilanordnung ferner dazu ausgebildet ist, das zweite Leitungssystem automatisch zu schließen, bevor der Treibstoff in dem Treibstofftank unter den zweiten Treibstoffeinlass absinkt, um ein Eindringen einer gasförmigen Substanz in das zweite Leitungssystem zu vermeiden.

15. System nach Anspruch 14, wobei der Treibstofftank ein erster Treibstofftank ist und wobei das System ferner aufweist:
eine zweite Treibstofftankeinrichtung zur Aufnahme von Treibstoff in dem Luftfahrzeug,
eine dritte Leitung, um von dem zweiten Treibstofftank über einen in dem zweiten Treibstofftank angeordneten dritten Treibstoffeinlass Treibstoff zum Triebwerk und/oder dem Luftbetankungsanschluss zu leiten; und
eine dritte Ventilanordnung, um die dritte Leitung automatisch zu schließen, bevor der Treibstoff in der zweiten Treibstofftankeinrichtung unter den dritten Treibstoffeinlass absinkt, um ein Eindringen einer gasförmigen Substanz in die dritte Leitung zu vermeiden.

16. System nach Anspruch 15, wobei der erste Treibstofftank herausnehmbar in einem Rumpf des Luftfahrzeugs angeordnet ist und der zweite Treibstofftank herausnehmbar in dem Rumpf zumindest in der Nähe des ersten Treibstofftanks angeordnet ist.

17. System nach Anspruch 15, wobei die erste, zweite und dritte Leitung mit einer gemeinsamen Anschlusseinrichtung funktionell verbunden sind.

## Revendications

1. Système pour fournir du carburant à au moins l'un parmi un moteur et un collecteur de ravitaillement aérien sur un aéronef (100), le système comprenant un système de réservoir de carburant auxiliaire, le système de réservoir de carburant auxiliaire comprenant :
un réservoir (120, 121, 122), comprenant une partie de transport de carburant (225) et une région de bassin collecteur (446) s'étendant vers le bas à partir du fond de la partie de transport de carburant ;
un collecteur de sortie de carburant (230) d'aéronef comprenant :
un premier conduit (661a) ayant une première entrée de carburant (662) positionnée pour aspirer le carburant de la région de bassin collecteur (446) du réservoir, le premier conduit ayant en outre une première sortie de carburant qui transfère le carburant par une première ouverture de sortie (432a) dans une paroi d'extrémité (443a) du réservoir, le premier conduit étant agencé pour transférer le carburant du réservoir de carburant à au moins l'un parmi le moteur et le collecteur de ravitaillement aérien ;
un premier ensemble de valve (664) couplé de manière opérationnelle au premier conduit et positionné à proximité de la région de bassin collecteur du réservoir, dans lequel le premier ensemble de valve est configuré afin de réduire l'écoulement de carburant par la première entrée de carburant lorsque le carburant dans le réservoir chute à ou sous un niveau sélectionné (731) ;
un deuxième ensemble de valve (664) couplé de manière opérationnelle à un deuxième conduit, le deuxième conduit (661b) ayant une deuxième entrée de carburant (662) positionnée pour aspirer le carburant de la région de bassin collecteur du réservoir, le deuxième conduit ayant en outre une seconde sortie de carburant qui transfère le carburant par une seconde ouverture de sortie (432a) dans la paroi d'extrémité du réservoir, dans lequel le deuxième ensemble de valve est positionné à proximité de la région de bassin collecteur du réservoir, et dans lequel le deuxième ensemble de valve est configuré pour réduire au moins l'écoulement de carburant par la deuxième entrée de carburant lorsque le carburant dans le réservoir chute à ou sous le niveau sélectionné, **caractérisé en ce que** le deuxième conduit est agencé pour transférer le carburant du réservoir de carburant à au moins l'un parmi le moteur et le collecteur de ravitaillement aérien.

2. Système selon la revendication 1, dans lequel le premier ensemble de valve est configuré pour être positionné dans le réservoir au moins à proximité de la première entrée de carburant.

3. Système selon la revendication 1, dans lequel l'ensemble de valve comprend :
une première valve (765) positionnée de manière mobile dans le premier conduit ; et
un capteur de niveau de carburant couplé de manière opérationnelle à la première valve, dans lequel le capteur de niveau de carburant est configuré pour fermer la première valve et réduire au moins l'écoulement de carburant par la première entrée lorsque le carburant dans le réservoir chute à ou sous le niveau sélectionné.

4. Système selon la revendication 1, dans lequel le premier ensemble de valve comprend :
une première valve positionnée de manière mobile dans le premier conduit ; et
un flotteur (763) couplé de manière opérationnelle à la première valve, dans lequel le mouvement du flotteur amène la première valve à se déplacer entre une première position dans laquelle le premier conduit est au moins approximativement ouvert et une seconde position dans laquelle le premier conduit est au moins approximativement fermé.

5. Système selon la revendication 4, dans lequel le flotteur est mécaniquement couplé à la valve.

6. Système selon la revendication 4, dans lequel le flotteur est électroniquement couplé à la valve.

7. Système selon la revendication 1, dans lequel le premier ensemble de valve comprend :
une valve montée de manière rotative dans le premier conduit ; et
un flotteur couplé de manière opérationnelle à la valve, dans lequel le mouvement du flotteur amène la valve à tourner entre une première position dans laquelle le premier conduit est au moins approximativement ouvert et une seconde position dans laquelle le premier conduit est au moins approximativement fermé.

8. Système selon la revendication 1, dans lequel l'ensemble de valve comprend :
une valve montée de manière rotative dans le premier conduit ;
un flotteur couplé de manière opérationnelle à la valve, dans lequel le flotteur est configuré pour se déplacer vers une position supérieure amenant la valve à tourner dans une première direction pour ouvrir au moins approximativement le premier conduit lorsque le carburant dans le réservoir est à ou au-dessus d'un premier niveau, et dans lequel le flotteur est en outre configuré pour se déplacer de la position supérieure vers une position inférieure amenant la valve à tourner dans une seconde direction pour fermer au moins approximativement le premier conduit lorsque le carburant dans le réservoir chute du premier niveau à un second niveau (732).

9. Système selon la revendication 1, dans lequel le réservoir est un premier réservoir, et dans lequel le collecteur de sortie de carburant comprend en outre :
un troisième conduit ayant une troisième entrée de carburant configurée pour aspirer le carburant d'un second réservoir positionné de manière adjacence au premier réservoir ; et
un troisième ensemble de valve couplé de manière opérationnelle au troisième conduit, dans lequel le troisième ensemble de valve est configuré pour réduire au moins l'écoulement de carburant par la troisième entrée de carburant dans lequel le carburant dans le second réservoir chute à ou sous un niveau sélectionné.

10. Système d'aéronef comprenant le système selon la revendication 9, dans lequel :
le premier réservoir est configuré pour contenir du carburant dans un fuselage (102) ;
le second réservoir a une seconde paroi d'extrémité (443b) faisant face à la première paroi d'extrémité ;
le collecteur de sortie de carburant s'étend à travers la première paroi d'extrémité du premier réservoir et la seconde paroi d'extrémité du second réservoir.

11. Système d'aéronef selon la revendication 10, dans lequel le premier corps de réservoir comprend des parties de coin biseautées (445) configurées pour suivre au moins approximativement le contour d'une soute du fuselage.

12. Système d'aéronef selon la revendication 10, dans lequel la partie de bassin collecteur définit la partie de transport de carburant la plus basse du corps de réservoir.

13. Système d'aéronef selon la revendication 10, comprenant en outre le fuselage.

14. Système selon l'une quelconque des revendications 1 à 9, le système comprenant en outre :
une première pompe (672a) positionnée dans le réservoir de carburant et couplée de manière opérationnelle au premier conduit pour déplacer le carburant par la première entrée de carburant ; le premier ensemble de valve étant en outre configuré pour fermer automatiquement le premier conduit avant que le carburant dans le premier réservoir de carburant chute au-dessous de la première entrée de carburant pour éviter l'ingestion d'une substance gazeuse dans les moyens de conduit ;
une seconde pompe (672b) positionnée dans le réservoir de carburant et couplée de manière opérationnelle au second conduit pour déplacer le carburant par la deuxième entrée de carburant ; le deuxième ensemble de valve étant en outre configuré pour fermer automatiquement les seconds moyens de conduit avant que le carburant dans le réservoir de carburant chute au-dessous de la deuxième entrée de carburant pour éviter l'ingestion d'une substance gazeuse dans les seconds moyens de conduit.

15. Système selon la revendication 14, dans lequel le réservoir de carburant est un premier réservoir de carburant et dans lequel le système comprend en outre :
des seconds moyens de réservoir de carburant pour transporter le carburant dans l'aéronef ;
un troisième conduit pour transférer le carburant du second réservoir de carburant à au moins l'un parmi le moteur et le collecteur de ravitaillement aérien via une troisième entrée de carburant positionnée dans le second réservoir de carburant ; et
un troisième ensemble de valve pour fermer automatiquement le troisième conduit avant que le carburant dans les seconds moyens de réservoir de carburant chute sous la troisième entrée de carburant pour éviter l'ingestion d'une substance gazeuse dans le troisième conduit.

16. Système selon la revendication 15, dans lequel le premier réservoir de carburant est positionné de manière amovible dans un fuselage de l'aéronef, et le second réservoir de carburant est positionné de manière amovible dans le fuselage au moins à proximité dudit premier réservoir de carburant.

17. Système selon la revendication 15, dans lequel les premier, deuxième et troisième conduits sont couplés de manière opérationnelle à des moyens de collecteur communs.
